# FASCICULE DE BREVET EUROPEEN

(11) **EP 3 609 928 B1**
(45) Date de publication et mention de la délivrance du brevet: **09.06.2021**
(21) Numéro de dépôt: 18724948.7
(22) Date de dépôt: 10.04.2018
(51) Int. Cl.: C08C 19/22, B60C 1/00, C07F 7/18, C08C 19/25, C08F 236/10, C08K 3/00, C08C 19/44, C08F 36/04, C08L 9/00

(54) **ÉLASTOMÈRE DIÉNIQUE MODIFIÉ PAR UN GROUPEMENT COMPRENANT UN ATOME DE SILICIUM, PROCÉDÉ POUR SA SYNTHÈSE ET COMPOSITION DE CAOUTCHOUC LE CONTENANT**
DURCH EINE EIN SILICIUMATOM UMFASSENDE GRUPPE MODIFIZIERTES DIENELASTOMER, VERFAHREN ZUR SYNTHESE DAVON UND KAUTSCHUKZUSAMMENSETZUNG DAMIT
DIENE ELASTOMER MODIFIED BY A GROUP COMPRISING A SILICON ATOM, PROCESS FOR THE SYNTHESIS THEREOF AND RUBBER COMPOSITION CONTAINING SAME

(30) Priorité: 11.04.2017 FR 1753160
(43) Date de publication de la demande: 19.02.2020
(73) Titulaire: COMPAGNIE GENERALE DES ETABLISSEMENTS MICHELIN, 63000 Clermont-Ferrand (FR)
(72) Inventeur: DIRE, Charlotte, 63040 Clermont-Ferrand Cedex 9 (FR); PINEL, Stéphanie, 63040 Clermont-Ferrand Cedex 9 (FR)
(74) Mandataire: Le Cam, Véronique Marie Christine
(86) Numéro de dépôt international: PCT/FR2018/050896
(87) Numéro de publication internationale: WO 2018/189475

(56) Documents cités:
- EP-A2- 2 565 208
- WO-A1-2014/120172
- JP-A- 2009 263 479

## Description

La présente invention est relative à un élastomère diénique modifié par un groupement comprenant un atome de silicium, et porteur d'une autre fonction. La présente invention concerne également son procédé de synthèse ainsi qu'une composition de caoutchouc, utilisable notamment pour la fabrication de pneumatiques, comprenant cet élastomère ainsi qu'une charge renforçante.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en œuvre sous forme de compositions de caoutchouc utilisables pour la fabrication de divers produits semi-finis entrant dans la constitution des pneumatiques. Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation dans le but d'obtenir une bonne interaction entre le polymère ainsi modifié et la charge, qu'il s'agisse du noir de carbone ou d'une autre charge renforçante. Il a notamment été proposé d'utiliser des polymères diéniques fonctionnalisés par des dérivés alcoxysilanes.

A titre d'illustration de cet art antérieur relatif à de telles modifications, on peut par exemple citer le brevet américain US-A-5 066 721, qui décrit une composition de caoutchouc comprenant un polymère diénique fonctionnalisé par un alcoxysilane ayant au moins un reste alcoxyle non hydrolysable en mélange avec de la silice. On peut également citer la demande de brevet EP A 0 299 074 qui décrit des polymères fonctionnalisés comportant des fonctions alcoxysilanes en bout de chaîne. Ces polymères fonctionnalisés ont été décrits dans l'art antérieur comme efficaces pour réduire l'hystérèse et améliorer la tenue à l'abrasion, cependant leurs propriétés restent insuffisantes pour permettre la mise en œ uvre de ces polymères dans des compositions destinées à constituer des bandes de roulement de pneumatiques.

Il a également été proposé de combiner la fonctionnalisation par des fonctions alcoxysilanes à la fonctionnalisation par d'autres fonctions, notamment la fonction amine. Ainsi, le brevet EP 0 992 537 décrit une composition de caoutchouc qui comprend un élastomère étendu modifié en bout de chaîne par une fonction alcoxysilane et portant à l'autre extrémité ou le long de sa chaîne une ou plusieurs fonctions amine. Par ailleurs, il a également été proposé d'améliorer les propriétés des compositions de caoutchouc en utilisant des élastomères fonctionnalisés en bout de chaîne par des fonctions alcoxysilanes portant un groupement amine, que ce soit en mélange noir, silice ou hybride. On peut citer, par exemple, la demande de brevet US 2005/0203251 qui décrit une composition de caoutchouc renforcée par de la silice contenant un élastomère fonctionnalisé en bout de chaîne par un alcoxysilane portant un groupement amine.

Dans l'optique d'améliorer les propriétés mécaniques et dynamiques des compositions de caoutchouc destinées à une application pneumatique, notamment l'hystérèse tout en conservant une mise en œuvre à cru satisfaisante, la Demanderesse a proposé dans le document WO 2009133068 A1 un élastomère diénique fonctionnalisé essentiellement constitué par l'espèce couplée d'un élastomère modifié possédant au sein de la chaîne un groupement alcoxysilane porteur d'une fonction amine, l'atome de silicium de ce groupement liant les deux parties de la chaîne principale de l'élastomère diénique.

Il s'avère par ailleurs, que dans certaines conditions de stockage avant une utilisation en composition de caoutchouc, le vieillissement des élastomères modifiés avec des groupements alcoxysilanes, portant une autre fonction notamment un groupement amine, entraînait une forte modification de leur macrostructure.

Les inventeurs pensent, sans être liés à cette seule interprétation, que ces élastomères modifiés présentent une instabilité au stockage du fait des réactions d'hydrolyse et de condensation des groupements alcoxysilanes qui induisent ainsi une évolution de macrostructure de l'élastomère.

Le problème technique que se propose de résoudre la présente invention est de stabiliser la macrostructure des élastomères modifiés comprenant des groupements alcoxysilanes portant notamment une autre fonction, en freinant son évolution, voire en la stoppant, sans pénaliser leur fabrication ou les propriétés que ces élastomères confèrent aux compositions de caoutchouc les contenant. Il convient également de résoudre ce problème en restant dans le cadre d'un procédé économiquement intéressant d'un point de vue industriel.

Ce but est atteint en ce que les Inventeurs ont maintenant mis en évidence qu'un élastomère diénique modifié avec un agent de fonctionnalisation spécifique est stable au stockage dans la mesure où il ne présente pas d'évolution macrostructurelle significative lors du stockage pendant au moins un mois. La synthèse d'un tel élastomère modifié reste économiquement intéressante dans le cadre d'une mise en œuvre industrielle.

L'invention a donc pour objet un élastomère diénique modifié comprenant au sein de sa structure au moins un groupe alcoxysilane dont l'atome de silicium fait partie de la chaîne principale de l'élastomère et l'atome de silicium est en outre substitué par au moins une autre fonction comprenant un atome d'azote liée à l'atome de silicium par l'intermédiaire d'un groupement espaceur défini comme étant un radical hydrocarboné divalent aliphatique linéaire et saturé, ayant au moins 5 atomes de carbone, de préférence au moins 6, et au plus 10 atomes de carbone, de préférence au plus 9, préférentiellement un radical hydrocarboné divalent aliphatique, linéaire et saturé en C₆, C₇, C₈ ou C₉. Selon certaines variantes, le groupement espaceur est préférentiellement un radical hydrocarboné divalent aliphatique linéaire et saturé en C₆, et, selon d'autres variantes, le groupement espaceur est un radical hydrocarboné divalent aliphatique linéaire et saturé en C₇, C₈ ou C₉.

L'invention a également pour objet un procédé de synthèse d'un tel élastomère diénique modifié comprenant la réaction d'un élastomère diénique vivant, résultant de la polymérisation d'au moins un monomère diène, avec un agent de fonctionnalisation spécifique choisi parmi les composés alcoxysilanes comprenant une autre fonction comprenant un atome d'azote, liée à l'atome de silicium par l'intermédiaire d'un groupement espaceur défini comme étant un radical hydrocarboné divalent aliphatique linéaire et saturé ayant au moins 5 atomes de carbone, de préférence au moins 6, et au plus 10 atomes de carbone, de préférence au plus 9, préférentiellement un radical hydrocarboné divalent aliphatique linéaire et saturé en C₆, C₇, C₈ ou C₉. Selon certaines variantes, le groupement espaceur est préférentiellement un radical hydrocarboné divalent aliphatique linéaire et saturé en C₆, et, selon d'autres variantes, le groupement espaceur est un radical hydrocarboné divalent aliphatique linéaire et saturé en C₇, C₈ ou C₉.

L'invention a encore pour objet un élastomère diénique modifié directement obtenu par ce procédé de synthèse.

L'invention a aussi pour objet une composition de caoutchouc à base d'au moins un élastomère diénique modifié conforme à l'invention.

L'invention a aussi pour objet un pneumatique qui comprend une composition de caoutchouc conforme à l'invention.

### DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomères présents dans la matrice élastomère, la matrice élastomère désignant la totalité des élastomères présents dans la composition de caoutchouc.

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente demande, par "majoritairement" ou "majoritaire" en liaison avec un composé, on entend que ce composé est majoritaire parmi les composés du même type dans la composition, c'est-à-dire que c'est celui qui représente la plus grande fraction pondérale parmi les composés du même type. Ainsi, par exemple, un élastomère majoritaire est l'élastomère représentant la plus grande fraction pondérale par rapport au poids total des élastomères dans la composition. De la même manière, une charge dite majoritaire est celle représentant la plus grande fraction pondérale par rapport au poids total de l'ensemble des charges de la composition. Egalement, une population de chaîne fonctionnelle élastomère dite majoritaire est celle représentant la plus grande fraction pondérale parmi les chaînes constituant l'élastomère diénique, par rapport au poids total de l'élastomère diénique. Dans un système comprenant un seul composé d'un certain type, celui-ci est majoritaire au sens de la présente invention.

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Dans la présente description, on entend par élastomère diénique modifié un élastomère diénique qui comporte un groupement comprenant un ou plusieurs hétéroatomes dont un atome de silicium, celui-ci se situant dans la chaîne principale de l'élastomère incluant les positions terminales de la chaîne principale (ou extrémités de chaîne).

Ce groupement peut se situer en bout de chaîne élastomère principale linéaire. On dira alors que l'élastomère diénique est fonctionnalisé en bout ou en extrémité de chaîne. C'est généralement un élastomère obtenu par réaction d'un élastomère vivant sur un agent de fonctionnalisation, c'est à dire toute molécule comprenant au moins un groupement chimique connu par l'homme de l'art pour réagir avec un bout de chaîne vivant.

Ce groupement peut se situer dans la chaîne élastomère principale linéaire. On dira alors que l'élastomère diénique est couplé ou encore fonctionnalisé en milieu de chaîne, par opposition à la position "en bout de chaîne" et bien que le groupement ne se situe pas précisément au milieu de la chaîne élastomère. C'est généralement un élastomère obtenu par réaction d'un élastomère vivant sur un agent de couplage, c'est à dire toute molécule comprenant au moins deux groupements chimiques connus par l'homme de l'art pour réagir avec un bout de chaîne vivant.

L'homme du métier comprendra que de manière générale une réaction de fonctionnalisation avec un agent de type alcoxysilane comprenant plus d'une fonction alcoxy réactive vis-à-vis de l'élastomère vivant, résulte en un mélange élastomère dont la composition dépend des conditions opératoires, principalement le rapport molaire de l'agent de fonctionnalisation aux chaînes vivantes, et du nombre de ces fonctions réactives. Le mélange peut comprendre des élastomères fonctionnalisés en bout de chaîne, des élastomères fonctionnalisés en milieu de chaîne et, le cas échéant, des élastomères étoilés ou encore des élastomères non fonctionnalisés. Les élastomères fonctionnalisés en bout de chaîne et en milieu de chaîne sont susceptibles de comporter un groupement alcoxysilane.

Dans la présente description, l'expression "unité monomère", qu'il soit diène ou autre, s'entend comme une unité du polymère issue du monomère en question.

Il convient de noter que dans le cadre de l'invention, les monomères utilisés peuvent être d'origine fossile ou biosourcée. Dans ce dernier cas, ils peuvent être partiellement ou totalement issus de la biomasse ou obtenus à partir de matières premières renouvelables issues de la biomasse.

L'invention a donc pour objet un élastomère diénique modifié au sein de la chaîne principale un atome de silicium substitué, d'une part, par au moins un groupement alcoxy, éventuellement partiellement ou totalement hydrolysé en hydroxyle, et, d'autre part, par au moins une autre fonction comprenant un atome d'azote liée à l'atome de silicium par l'intermédiaire d'un groupement espaceur choisi parmi les radicaux hydrocarbonés divalents aliphatiques, acycliques et saturés , linéaires ayant au moins 5 atomes de carbone, de préférence au moins 6, et au plus 10 atomes de carbone, de préférence au plus 9.

Par élastomère diénique, doit être compris de manière connue un élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique selon l'invention, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs monomères éthyléniquement insaturés (comprenant une double liaison carbone-carbone) parmi lesquels les mono-oléfines aliphatiques telles que l'éthylène et les alpha-oléfines aliphatique ayant 3 à 18 atomes de carbone, et les composés vinylaromatiques ayant de 8 à 20 atomes de carbone. Dans le cas de copolymères obtenus par copolymérisation avec un ou plusieurs monomères éthyléniquement insaturés, ceux-ci contiennent de 20 % à 99 % en poids d'unités diéniques, et de 1 à 80 % en poids d'unités issues de monomères éthyléniquement insaturés.

A titre de diènes conjugués conformes à l'invention conviennent notamment le butadiène-1,3, les 2,3 di(alkyl en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, l'isoprène, le 1,3-pentadiène et le 2,4 hexadiène, etc. Avantageusement le diène conjugué est le butadiène-1,3 ou l'isoprène, de préférence le butadiène-1,3.

A titre de monomère alpha-oléfine aliphatique convient par exemple une alpha-oléfine aliphatique ayant de 3 à 18 atomes de carbone, avantageusement ayant 3 à 6 atomes de carbone. On peut citer le propylène, le butène, le pentène, l'hexène ou un mélange de ces composés.

A titre de monomères vinylaromatiques conviennent notamment le styrène, l'ortho-, méta, para-méthylstyrène, l'alpha-méthylstyrène le mélange commercial "vinyltoluène", le para-tertiobutylstyrène, les méthoxystyrènes, le vinylmésitylène, le divinylbenzène et le vinylnaphtalène, etc. Avantageusement le monomère vinylaromatique est le styrène.

L'élastomère diénique est choisi préférentiellement dans le groupe des élastomères diéniques constitué par les polybutadiènes (BR), les polyisoprènes (IR) de synthèse, les copolymères de butadiène, en particulier les copolymères de butadiène et d'un monomère vinyl aromatique, les copolymères de butadiène et d'une mono-oléfine aliphatique, les copolymères d'isoprène et les mélanges de ces élastomères. De tels copolymères sont plus particulièrement des copolymères de butadiène-styrène (SBR), des copolymères de butadiène-éthylène (EBR), des copolymères d'isoprène-butadiène (BIR), des copolymères d'isoprène-styrène (SIR) et des copolymères d'isoprène-butadiène-styrène (SBIR). Parmi ces copolymères, les copolymères de butadiène-styrène (SBR) sont particulièrement préférés.

L'élastomère diénique peut avoir toute microstructure qui est fonction des conditions de polymérisation utilisées. L'élastomère peut être à blocs, statistique, séquencé, microséquencé, etc.

L'élastomère diénique modifié selon l'invention comprend au sein de sa structure au moins un groupe alcoxysilane, éventuellement partiellement ou totalement hydrolysé en silanol, dont l'atome de silicium fait partie de la chaîne principale de l'élastomère et est en outre substitué par une autre fonction comprenant un atome d'azote liée à l'atome de silicium par l'intermédiaire d'un groupement espaceur.

Lorsque le groupe alcoxysilane se situe en bout de chaîne principale, celui-ci peut être un monoalcoxysilane ou un dialcoxysilane. C'est-à-dire que l'atome de silicium peut être substitué par un ou deux groupements alcoxy, éventuellement partiellement ou totalement hydrolysé(s) en hydroxy.

Lorsque le groupe alcoxysilane se situe en milieu de chaîne principale, celui-ci est un monoalcoxysilane. C'est-à-dire que l'atome de silicium est substitué par un groupement alcoxy, éventuellement partiellement ou totalement hydrolysé en hydroxy.

Les groupements alcoxy du groupe alcoxysilane peuvent être, selon certaines variantes de l'invention, partiellement ou totalement hydrolysés en hydroxyle. Selon ces variantes, tout ou au moins 50% molaire des fonctions alcoxy portées par l'élastomère diénique modifié est hydrolysé en hydroxyle. Particulièrement, au moins 80% molaire des fonctions alcoxy portées par l'élastomère diénique modifié est hydrolysé en hydroxyle, voire 100%.

Les radicaux alkyles des groupements alcoxy substituant l'atome de silicium sont, indépendamment les uns des autres, choisis parmi les radicaux alkyles en C₁-C₁₀, voire en C₁-C₈, de préférence parmi les radicaux alkyles en C₁-C₄, plus préférentiellement parmi méthyle et éthyle.

Selon l'invention, l'atome de silicium du groupe alcoxysilane est en outre substitué par au moins une autre fonction comprenant un atome d'azote liée à l'atome de silicium par l'intermédiaire d'un groupement espaceur choisi parmi les radicaux hydrocarbonés divalents aliphatiques, linéaires et saturés, ayant au moins 5 atomes de carbone, de préférence au moins 6, et au plus 10 atomes de carbone, de préférence au plus 9. Ce groupement espaceur est selon des variantes de l'invention choisi parmi les radicaux hydrocarbonés divalents aliphatiques linéaires saturés en C₆, C₇, C₈, ou C₉. Selon certaines variantes, le groupement espaceur est préférentiellement un radical hydrocarboné divalent aliphatique linéaire et saturé en C₆, et, selon d'autres variantes, le groupement espaceur est un radical hydrocarboné divalent aliphatique linéaire et saturé en C₇, C₈ ou C₉.

Cette caractéristique concernant la nature du groupement espaceur est particulièrement importante dans le cadre de l'invention et contribue, de manière significative et inattendue, à la stabilisation de la macrostructure de l'élastomère diénique modifié lors du stockage. En dessous de 5 atomes de carbone dans le groupement espaceur, une stabilisation satisfaisante de la macrostructure n'est pas observée.

Selon l'invention, le groupement espaceur lie à l'atome de silicium du groupe alcoxysilane, au moins une autre fonction comprenant un atome d'azote. Cette autre fonction comprenant un atome d'azote est une amine primaire protégée ou non, secondaire protégée ou non ou tertiaire, cyclique ou non, un isocyanate, une imine, ou un cyano. Lorsque la fonction est une amine, celle-ci est de préférence une amine tertiaire.

Ainsi, à titre de fonction amine secondaire ou tertiaire, on peut citer les amines substituées par des radicaux alkyle en C₁-C₁₀, de préférence alkyle en C₁-C₄, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements métylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-.

A titre de fonction imine, on peut citer les cétimines. Par exemple, conviennent les groupements (1,3-diméthylbutylidène)amino-, (éthylidène)amino-, (1-méthylpropylidène)amino-, (4-N,N-diméthylaminobenzylidène)amino-, (cyclohexylidène)amino-, dihydroimidazole et imidazole.

Selon des variantes préférentielles de l'invention, l'autre fonction est une amine tertiaire dialkylamino- dont les radicaux alkyles, indépendamment l'un de l'autre, sont en C₁-C₄, de préférence méthyle ou éthyle.

Les différentes variantes et aspects préférentiels concernant la nature de l'élastomère diénique modifié, de la fonction alcoxysilane, du groupement espaceur et de l'autre fonction comprenant un atome d'azote sont combinables entre eux sous réserve de leur compatibilité.

Selon des variantes avantageuses de l'invention, au moins une, au moins deux, au moins trois, au moins quatre des caractéristiques suivantes est ou sont respectée(s) et de préférence toutes :
- l'autre fonction est une amine tertiaire, plus particulièrement un groupement diéthylamino- ou diméthylamino-.
- le groupement espaceur est un radical hydrocarboné divalent aliphatique linéaire et saturé en C₆, C₇, C₈ ou Cg, de préférence en C₆.
- dans le ou les groupes alcoxy substituant l'atome de silicium, le radical alkyle a 1 à 4 atomes de carbone, de préférence c'est un radical méthyle ou un radical éthyle.
- au moins 50% des fonctions alcoxy substituant l'atome de silicium est hydrolysé en hydroxyle.
- l'élastomère diénique est un copolymère butadiène-styrène.

Selon des variantes de l'invention, l'élastomère diénique modifié peut être représenté par la formule générale I suivante : 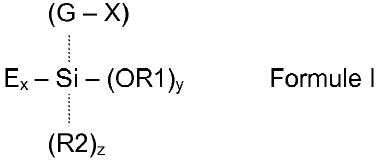 dans laquelle :
- E représente une chaîne élastomère diénique ;
- R1 représente un atome d'hydrogène ou un radical alkyle en C₁-C₁₀, voire en C₁-C₈, de préférence un radical alkyle en C₁-C₄, plus préférentiellement méthyle et éthyle ;
- R2 représente un radical alkyle, substitué ou non substitué, en C₁-C₁₀, voire en C₁-C₈, de préférence un radical alkyle en C₁-C₄, plus préférentiellement méthyle et éthyle ;
- G représente un groupement espaceur choisi parmi les radicaux hydrocarbonés divalents aliphatiques linéaires et saturés ayant au moins 5 atomes de carbone, de préférence au moins 6, et au plus 10 atomes de carbone, de préférence au plus 9;
- X représente une fonction comprenant un atome d'azote ;
- x vaut 1 ou 2, y vaut 1 ou 2, et z vaut 0 ou 1, sous réserve que x+y+z =3.

Lorsque y vaut 1, alors, soit x=z=1, soit x=2 et z=0.

Lorsque y vaut 2, alors, x=1 et z=0.

Selon des variantes de l'invention, G représente un groupement espaceur choisi parmi les radicaux hydrocarbonés divalents aliphatiques linéaires et saturés en C₆, C₇, C₈ ou Cg. Selon certaines de ces variantes, le groupement espaceur est préférentiellement un radical hydrocarboné divalent aliphatique linéaire et saturé en C₆, et, selon d'autres variantes, le groupement espaceur est un radical hydrocarboné divalent aliphatique linéaire et saturé en C₇, C₈ ou C₉.

Selon des variantes de l'invention, la fonction X peut être une amine primaire protégée ou non, secondaire protégée ou non ou tertiaire, cyclique ou non, un isocyanate, un imine, un cyano. Selon des variantes préférentielle de l'invention, X est une amine, plus préférentiellement une amine tertiaire -NR₂ dont les radicaux alkyles R, indépendamment l'un de l'autre, sont en C₁-C₄, de préférence méthyle ou éthyle.

E est une chaîne élastomère diénique dont la nature est telle que définie plus haut. Préférentiellement E est une chaîne polybutadiène (BR), polyisoprène (IR) de synthèse, copolymère butadiène, copolymère d'isoprène. Plus particulièrement parmi les chaînes copolymères, E est une chaîne copolymère butadiène-styrène (SBR), copolymère butadiène-éthylène (EBR), copolymère isoprène-butadiène (BIR), copolymère isoprène-styrène (SIR) ou copolymère isoprène-butadiène-styrène (SBIR). Parmi celles-ci E est de préférence une chaîne copolymère butadiène-styrène (SBR).

Les différentes variantes et aspects préférentiels concernant la nature de E, R1, R2, G, X et R, ainsi que concernant les valeurs de x, y et z, sont combinables entre eux sous réserve de leur compatibilité.

Selon des variantes avantageuses de l'invention, au moins une, au moins deux, au moins trois, au moins quatre caractéristiques suivantes est ou sont respectée(s) et de préférence toutes :
- X est une fonction amine tertiaire -NR₂ dont les radicaux alkyles R, indépendamment l'un de l'autre, sont en C₁-C₄, plus particulièrement X est un groupement diéthylamino- ou diméthylamino-.
- G est un radical hydrocarboné divalent aliphatique linéaire et saturé en C₆, C₇, C₈ ou Cg, de préférence en C₆.
- le radical alkyle R1 a 1 à 4 atomes de carbone, de préférence R1 est un radical méthyle ou un radical éthyle.
- au moins 50% des fonctions OR1 est hydrolysé en OH.
- E est une chaîne copolymère butadiène-styrène.

Un autre objet de l'invention est le procédé de synthèse d'un élastomère modifié conforme à la description précédente.

Ainsi selon l'invention, un procédé de synthèse d'un élastomère diénique modifié comprenant dans la chaîne principale un atome de silicium substitué d'une part par au moins un groupement alcoxy, éventuellement partiellement ou totalement hydrolysé en hydroxy, et d'autre part par au moins une autre fonction comprenant un atome d'azote liée à l'atome de silicium par l'intermédiaire d'un groupement espaceur, comprend
a) une étape de polymérisation d'au moins un monomère diène,
b) une étape de modification de l'élastomère diénique vivant obtenu à l'étape précédente au moyen d'au moins un agent de fonctionnalisation répondant à la formule générale suivante :

   Si (OR')_{3-z'} R2_{z'} (G-X), Formule 2

   dans laquelle,
   - G est un groupement espaceur choisi parmi les radicaux hydrocarbonés divalents aliphatiques, linéaires et saturés, ayant au moins 5 atomes de carbone, de préférence au moins 6, et au plus 10 atomes de carbone, de préférence au plus 9;
   - X représente une amine primaire protégée ou non, secondaire protégée ou non ou tertiaire, cyclique ou non, un isocyanate, une imine, ou un cyano;
   - R', indépendamment les uns des autres, représentent un groupe alkyle en C₁-C₁₀, voire en C₁-C₈, de préférence un groupe alkyle en C₁-C₄, plus préférentiellement méthyle et éthyle ;
   - R2 représente un groupe alkyle en C₁-C₁₀, voire en C₁-C₈ plus préférentiellement méthyle et éthyle ;
   - z' vaut 0 ou 1.

Selon certaines variantes du procédé de l'invention, z' vaut 0. Selon d'autres variantes de l'invention, z' vaut 1.

Selon certaines variantes de l'invention, G représente groupement espaceur choisi parmi les radicaux hydrocarbonés divalents aliphatiques linéaires et saturés en C₆, C₇, C₈ ou C₉. Préférentiellement selon ces variantes, le groupement espaceur est un radical hydrocarboné divalent aliphatique linéaire et saturé en C₆. Selon d'autres de ces variantes, le groupement espaceur est un radical hydrocarboné divalent aliphatique linéaire et saturé en C₇, C₈ ou C₉.

Selon des variantes préférentielles du procédé de l'invention, X est une amine primaire, protégée ou non, secondaire, protégée ou non, ou tertiaire. L'atome d'azote peut alors être substitué par deux groupements, identiques ou différents, pouvant être un radical trialkyl silyle, le groupement alkyle ayant 1 à 4 atomes de carbone, ou un radical alkyle en C₁-C₁₀, de préférence alkyle en C₁-C₄, plus préférentiellement un radical méthyle ou éthyle, ou alors les deux substituants de l'azote forment avec celui-ci un hétérocycle contenant un atome d'azote et au moins un atome de carbone, de préférence de 2 à 6 atomes de carbone,

Selon ces variantes préférentielles de l'invention, X est plus préférentiellement encore une fonction amine tertiaire -NR₂ dont les radicaux alkyles R, indépendamment l'un de l'autre, sont en C₁-C₄, de préférence méthyle ou éthyle. En effet, l'utilisation d'un agent de fonctionnalisation comprenant une fonction amine tertiaire permet de s'affranchir de toute étape supplémentaire de déprotection des amines et de ses éventuelles réactions secondaires.

Les différentes variantes et aspects préférentiels concernant la nature de R', R2, G, X et R, ainsi que concernant les valeurs de z, sont combinables entre eux sous réserve de leur compatibilité.

Selon les variantes de l'invention où X est une fonction amine, on peut citer par exemple à titre d'agents de fonctionnalisation, , les (N,N-dialkylaminohexyl)trialcoxysilanes, les (N-alkylaminohexyl)trialcoxysilanes dont la fonction amine secondaire est protégée par un groupement trialkyl silyl et les aminohexyltrialcoxysilanes dont la fonction amine primaire est protégée par deux groupements trialkyl silyl, les (N,N-dialkylaminohexyl)dialcoxyalkylsilanes, les (N-alkylaminohexyl)dialcoxyalkylsilanes dont la fonction amine secondaire est protégée par un groupement trialkyl silyl et les aminohexyldialcoxyalkylsilanes dont la fonction amine primaire est protégée par deux groupements trialkyl silyl. Les substituants alkyle de l'atome d'azote et de silicium ainsi que les substituants alcoxy sont tels que décrits plus haut.

Préférentiellement, selon ces variantes de l'invention, X est une fonction amine tertiaire et l'agent de fonctionnalisation peut être choisi parmi les composés 6-(N,N-diméthylaminohexyl)triméthoxysilane, 6-(N,N-diméthylaminohexyl)triéthoxysilane, 6-(N,N-diéthylaminohexyl)triméthoxysilane, 6-(N,N-diéthylaminohexyl)triéthoxysilane, 6-(N,N-diméthylaminohexyl)diméthoxyméthylsilane, 6-(N,N-diméthylaminohexyl)diéthoxyméthylsilane, 6-(N,N-diéthylaminohexyl)diéthoxyméthylsilane et 6-(N,N-diéthylaminohexyl)diméthoxyméthylsilane.

Selon des variantes de l'invention, X est une fonction isocyanate. Préférentiellement, l'agent de fonctionnalisation peut être choisi parmi les composés 6-(isocyanatohexyl)triméthoxysilane, 6-(isocyanatohexyl)triéthoxysilane, 6-(isocyanatohexyl)diméthoxyméthylsilane, 6-(isocyanatohexyl)diéthoxyméthylsilane.

Selon des variantes de l'invention, X est une fonction imine. Préférentiellement, l'agent de fonctionnalisation peut être choisi parmi le N-(1,3-diméthylbutylidène)-3-(triméthoxysilyl)-1-hexanamine, le N-(1,3-diméthylbutylidène)-3-(triéthoxysilyl)-1-hexanamine, le N-(1,3-diméthylbutylidène)-3-(diméthoxyméthylsilyl)-1-hexanamine, le N-(1,3-diméthylbutylidène)-3-(diéthoxyméthylsilyl)-1-hexanamine, le N-(1,3-méthyléthylidène)-3-(triméthoxysilyl)-1-hexanamine, le N-(1,3-méthyléthylidène)-3-(triéthoxysilyl)-1-hexanamine, le N-(1,3-méthyléthylidène)-3-(diméthoxyméthylsilyl)-1-hexanamine, le N-(1,3-méthyléthylidène)-3-(diéthoxyméthylsilyl)-1-hexanamine, le N-ethylidène-3-(triméthoxysilyl)-1-hexanamine, le N-ethylidène-3-(triéthoxysilyl)-1-hexanamine, le N-ethylidène-3-(diméthoxyméthylsilyl)-1-hexanamine, le N-ethylidène-3-(diéthoxyméthylsilyl)-1-hexanamine, le N-(1-méthylpropylidène)-3-(triméthoxysilyl)-1-hexanamine, le N-(1-méthylpropylidène)-3-(triéthoxysilyl)-1-hexanamine, le N-(1-méthylpropylidène)-3-(diméthoxyméthylsilyl)-1-hexanamine, le N-(1-méthylpropylidène)-3-(diéthoxyméthylsilyl)-1-hexanamine, le N-(4-N,N-diméthylaminobenzylidène)-3-(triméthoxysilyl)-1-hexanamine, le N-(4-N,N-diméthylaminobenzylidène)-3-(triéthoxysilyl)-1-hexanamine, le N-(4-N,N-diméthylaminobenzylidène)-3-(diméthoxyméthylsilyl)-1-hexanamine, le N-(4-N,N-diméthylaminobenzylidène)-3-(diéthoxyméthylsilyl)-1-hexanamine, le N-(cyclohexylidène)-3-(triméthoxysilyl)-1-hexanamine, le N-(cyclohexylidène)-3-(triéthoxysilyl)-1-hexanamine, le N-(cyclohexylidène)-3-(diméthoxyméthylsilyl)-1-hexanamine, le N-(cyclohexylidène)-3-(diéthoxyméthylsilyl)-1-hexanamine, le N-(3-triméthoxysilylhexyl)-4,5-dihydroimidazole, le N-(3-triéthoxysilylhexyl)-4,5-dihydroimidazole, le N-(3-diméthoxyméthylsilylhexyl)-4,5-dihydroimidazole, le N-(3-diéthoxyméthylsilylhexyl)-4,5-dihydroimidazole, le N-(3-triméthoxysilylhexyl)-4,5-imidazole, le N-(3-triéthoxysilylhexyl)-4,5-imidazole et le N-(3-diméthoxyméthylsilylhexyl)-4,5-imidazole, le N-(3-diéthoxyméthylsilylhexyl)-4,5-imidazole.

Selon des variantes de l'invention, X est une fonction cyano. Préférentiellement, l'agent de fonctionnalisation peut être choisi parmi le 3-(cyanohexyl)triméthoxysilane, le 3-(cyanohexyl)triéthoxysilane, le 3-(cyanohexyl)diméthoxyméthylsilane et le 3-(cyanohexyl)diéthoxyméthylsilane.

Le procédé objet de l'invention comprend une première étape de polymérisation d'au moins un monomère diène conjugué

Cette étape de polymérisation selon l'invention peut être mise en œuvre par polymérisation anionique initiée par exemple au moyen d'un composé organique d'un métal alcalin ou alcalino-terreux. Selon d'autres mises en œuvre du procédé de l'invention, cette étape de polymérisation peut être une polymérisation en chaîne par catalyse (selon le mécanisme de coordination-insertion), au moyen d'un système catalytique à base d'un métal de terre rare, de titane ou d'un autre métal de transition. La polymérisation d'au moins un monomère diène conjugué selon ces différentes mises en œuvre génère des chaînes élastomères possédant un site réactif en extrémité de chaîne. Selon la méthode de polymérisation utilisée, ces sites sont plus ou moins réactifs. On parle alors communément d'élastomère (pseudo-)vivant ou de chaîne (pseudo-)vivante.

Dans le cadre d'une polymérisation anionique, l'initiateur de polymérisation peut être tout initiateur anionique, mono-ou polyfonctionnel connu. Toutefois un initiateur contenant un métal alcalin tel que le lithium ou alcalino-terreux tel que le baryum est utilisé à titre préférentiel. Un initiateur contenant un métal alcalin tel que le lithium est utilisé à titre préférentiel. Comme initiateurs organolithiens conviennent notamment ceux comportant au moins une liaison carbone-lithium et au moins une liaison azote-lithium. Des composés représentatifs sont les organolithiens aliphatiques tels que l'éthyllithium, le n-butyllithium (n BuLi), l'isobutyllithium, les amidures de lithium obtenus à partir d'une amine secondaire cyclique, telle que la pyrrolidine et l'hexaméthylèneimine. De tels initiateurs de polymérisation anionique sont connus de l'homme de l'art

Dans le cadre d'une polymérisation en chaîne par catalyse de coordination on utilise un système catalytique à base métal de terre rare, de de titane ou d'un autre métal de transition. De tels systèmes catalytiques sont amplement décrits dans la littérature.

La polymérisation peut être effectuée de manière connue en soi en continu. On effectue généralement la polymérisation à des températures comprises entre 0°C et 110°C et de préférence de 60°C à 100°C, voire de 70°C à 90°C. La température peut être maintenue constante tout au long de cette étape ou peut être variable, selon les caractéristiques visées de l'élastomère synthétisé. Le procédé de polymérisation peut être mis en œuvre en solution, en milieu plus ou moins concentré ou dilué. Le solvant de polymérisation est de préférence un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

A titre préférentiel, la polymérisation est une polymérisation anionique car elle permet d'atteindre un taux de chaines fonctionnalisées supérieur à celui obtenu avec une polymérisation par catalyse de coordination. Ainsi, préférentiellement, le procédé objet de l'invention comprend une étape de polymérisation anionique d'au moins un monomère diène conjugué en présence d'un initiateur de polymérisation.

A titre de monomères diènes conjugués conviennent notamment le butadiène-1,3, l'isoprène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

Selon certaines variantes du procédé de l'invention, le monomère diène conjugué peut être homopolymérisé.

Selon d'autres variantes du procédé de l'invention, le monomère diène conjugué peut être copolymérisé avec un ou plusieurs monomères diènes conjugués et/ou avec un ou plusieurs monomères éthyléniquement insaturés parmi lesquels les mono-oléfines aliphatiques telles que l'éthylène et les alpha-oléfines aliphatique ayant 3 à 18 atomes de carbone, et les composés vinylaromatiques ayant de 8 à 20 atomes de carbone.

A titre de monomère alpha-oléfine aliphatique convient par exemple une alpha-oléfine aliphatique ayant de 3 à 18 atomes de carbone, avantageusement ayant 3 à 6 atomes de carbone. On peut citer le propylène, le butène, le pentène, l'hexène ou un mélange de ces composés.

A titre de monomères vinylaromatiques conviennent notamment le styrène, l'ortho-, méta, para-méthylstyrène, l'alpha-méthylstyrène le mélange commercial "vinyltoluène", le para-tertiobutylstyrène, les méthoxystyrènes, le vinylmésitylène, le divinylbenzène et le vinylnaphtalène, etc. Avantageusement le monomère vinylaromatique est le styrène.

Ces variantes sont combinables avec les variantes et aspects préférentiels ou alternatifs décrits ci-après.

Selon des variantes de l'invention, un ou plusieurs composé(s) ayant un impact sur la microstructure de l'élastomère diénique peu(ven)t être utilisé(s) comme par exemple, un agent modifiant ou un agent randomisant.

La polymérisation anionique d'au moins un monomère diène conjugué en présence d'un initiateur de polymérisation, mise en œuvre préférée de la polymérisation dans le cadre de l'invention, génère des chaînes élastomères possédant un site réactif en extrémité de chaîne. On parle alors communément d'élastomère vivant ou de chaîne vivante. Ces chaînes vivantes, ou élastomères vivants, réagissent ensuite avec les sites réactifs d'au moins un agent de fonctionnalisation lors de l'étape de modification. L'étape de modification peut se dérouler en présence d'un agent de fonctionnalisation répondant à la Formule 2 ou d'un mélange d'au moins deux agents de fonctionnalisation différents répondant chacun à la Formule 2.

Le rapport molaire de l'agent de fonctionnalisation au métal de l'initiateur de polymérisation dépend essentiellement du type d'élastomère diénique modifié voulu. Ainsi, selon certaines variantes de l'invention, avec un rapport molaire de l'agent de fonctionnalisation au métal de l'initiateur de polymérisation d'au moins 0,30, notamment allant de 0,30 à 0,65, préférentiellement de 0,35 à 0,65 et encore plus préférentiellement de 0,40 à 0,60, voire de 0,45 à 0,55, on privilégie la formation d'élastomères couplés au sein de l'élastomère modifié. Selon d'autres variantes de l'invention, avec un rapport supérieur à 0,50, particulièrement supérieur ou égal à 0,65, préférentiellement supérieur à 1 ou encore variant de 0,65 à 1,45, on forme majoritairement des élastomères fonctionnalisés en bout de chaîne.

Le procédé de synthèse de l'élastomère diénique modifié selon l'invention peut se poursuivre de manière connue en soi par les étapes de récupération de l'élastomère modifié.

Selon les variantes de l'invention selon lesquelles l'agent de fonctionnalisation est porteur d'une fonction amine primaire ou secondaire protégée, le procédé de synthèse peut se poursuivre par une étape de déprotection de l'amine primaire ou secondaire. Cette étape est mise en œ uvre après la réaction de modification. On peut à titre d'exemple faire réagir les chaînes fonctionnalisées par le groupement amine protégé avec un acide, une base, un dérivé fluoré tel le fluorure de tétrabutylammonium, un sel d'argent tel que le nitrate d'argent, etc...pour déprotéger cette fonction amine. Ces différentes méthodes sont décrites dans l'ouvrage « Protective Groups in Organic Synthesis, T. W. Green, P. G. M. Wuts, Third Edition,1999 ». Cette étape de déprotection peut avoir pour effet d'hydrolyser tout ou partie des fonctions alcoxysilanes hydrolysables de l'élastomère diénique modifié pour les transformer en fonctions silanol.

Selon des variantes de l'invention, le procédé de synthèse peut comprendre une étape d'hydrolyse des fonctions alcoxysilanes hydrolysables par adjonction d'un composé acide, basique ou neutre tel que décrit dans le document EP 2 266 819 A1. Les fonctions hydrolysables sont alors transformées en fonction silanol.

Le procédé de synthèse de l'élastomère diénique modifié selon l'invention peut se poursuivre de manière connue en soi par les étapes de récupération de l'élastomère modifié.

Selon des variantes de ce procédé, ces étapes comprennent une étape de stripping en vue de récupérer l'élastomère issu des étapes antérieures sous forme sèche. Cette étape de stripping peut avoir pour effet d'hydrolyser tout ou partie des fonctions alcoxysilanes hydrolysables de l'élastomère diénique modifié pour les transformer en fonctions silanol. Avantageusement, au moins 50 à 70% molaire des fonctions peuvent ainsi être hydrolysées..

L'invention a également pour objet certains des agents de fonctionnalisation de formule 2 à titre de composés nouveaux, y compris les variantes et aspects préférentiels décrits plus haut. Plus particulièrement, l'invention a alors pour objet, à titre de composés nouveaux, les agents de fonctionnalisation de formule 2 dans laquelle - X représente une fonction amine secondaire, protégée ou non, ou amine tertiaire, une fonction isocyanate, une fonction imine, ou une fonction cyano. Plus particulièrement encore, l'invention a alors pour objet, à titre de composés nouveaux, les agents de fonctionnalisation de formule 2 dans laquelle X représente une fonction amine secondaire, protégée ou non, ou amine tertiaire, de préférence une fonction amine tertiaire dialkylamino- dont les radicaux alkyles, indépendamment l'un de l'autre, sont en C₁-C₄, de préférence méthyle ou éthyle.

L'invention a encore pour objet une composition de caoutchouc à base d'au moins une charge renforçante et d'une matrice élastomère comprenant au moins un élastomère diénique modifié selon l'invention.

La matrice élastomère peut comprendre jusqu'à 100 pce d'élastomère diénique modifié selon l'invention. Dans le cadre de la composition de caoutchouc renforcée, par "élastomère diénique modifié selon l'invention", on entend par là non seulement un élastomère modifié selon l'invention, mais encore tout mélange d'au moins deux élastomères modifiés selon l'invention.

Selon des variantes de l'invention, la matrice élastomère peut également comprendre au moins un élastomère diénique différent dudit élastomère diénique modifié selon l'invention. Ce ou ces élastomères diéniques différents de l'élastomère diénique modifié selon l'invention peuvent être choisis parmi les élastomères diéniques conventionnellement utilisés dans les pneus, tels que le caoutchouc naturel ou un élastomère synthétique, ou encore un autre élastomère fonctionnalisé, couplé ou étoilé. Ce ou ces élastomères diéniques différents dudit élastomère diénique modifié selon l'invention peuvent alors être présents de 1 à 70 parties en poids pour 100 parties d'élastomère diénique modifié selon l'invention.

Selon d'autres variantes, la matrice est uniquement constituée de cet élastomère diénique modifié selon la présente invention.

A titre de charge renforçante, on peut utiliser tout type connu pour ses capacités à renforcer une composition de caoutchouc utilisable pour la fabrication de pneumatiques, par exemple du noir de carbone, une charge inorganique renforçante telle que de la silice à laquelle est associé de manière connue un agent de couplage, ou encore un mélange de ces deux types de charge.

Selon une variante particulièrement intéressante de l'invention, la charge renforçante est majoritairement autre que du noir de carbone, c'est-à-dire qu'elle comprend plus de 50% en poids du poids total de la charge, d'une ou de plusieurs charges autres que du noir de carbone, notamment une charge inorganique renforçante telle que la silice, voire elle est exclusivement constituée d'une telle charge.

Selon cette autre variante, lorsque du noir de carbone est également présent, il peut être utilisé à un taux inférieur à 20 pce, plus préférentiellement inférieur à 10 pce (par exemple entre 0,5 et 20 pce, notamment de 1 à 10 pce).

De manière préférentielle, le taux de charge renforçante (noir de carbone et/ou autre charge renforçante telle que la silice) est compris entre 10 et 200 pce, plus préférentiellement entre 30 et 150 pce, l'optimum étant de manière connue différent selon les applications particulières visées.

Comme noirs de carbone conviennent tous les noirs de carbone, utilisés individuellement ou sous forme de mélanges, notamment les noirs conventionnellement mis en œuvre dans les pneumatiques ou leurs bandes de roulement (noirs dits de grade pneumatique). Ces noirs de carbone peuvent être utilisés à l'état isolé, tels que disponibles commercialement, ou sous toute autre forme, par exemple comme support de certains des additifs de caoutchouterie utilisés.

Comme charge inorganique renforçante, doit être entendu ici toute autre charge inorganique ou minérale, quelles que soient sa couleur et son origine (naturelle ou de synthèse), capable de renforcer à elle seule, sans autre moyen qu'un agent de couplage intermédiaire, une composition de caoutchouc destinée à la fabrication de pneumatiques; une telle charge se caractérise généralement, de manière connue, par la présence de groupes hydroxyles à sa surface.

Comme charges inorganiques renforçantes conviennent notamment des charges minérales du type siliceux, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. On citera également les charges minérales du type alumineux, en particulier de l'alumine (Al₂O₃) ou des (oxyde)hydroxydes d'aluminium, ou encore des oxydes de titane renforçants, par exemple décrits dans US 6 610 261 et US 6 747 087. Comme charges renforçantes conviennent également des charges renforçantes d'une autre nature, notamment du noir de carbone, dès lors que ces charges renforçantes sont recouvertes d'une couche siliceuse, ou bien comporteraient à leur surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

L'état physique sous lequel se présente la charge renforçante est indifférent, que ce soit sous forme de poudre, de microperles, de granulés, ou encore de billes. Bien entendu on entend également par charge inorganique renforçante des mélanges de différentes charges renforçantes, en particulier de silices hautement dispersibles telles que décrites ci-dessus.

Lorsque la silice est présente dans la composition à titre de charge renforçante, on peut utiliser comme agents de couplage des organosilanes, notamment des alcoxysilanes polysulfurés ou des mercaptosilanes, ou encore des polyorganosiloxanes au moins bifonctionnels. Des agents de liaison silice/élastomère, notamment, ont été décrits dans un grand nombre de documents, les plus connus étant des alcoxysilanes bifonctionnels tels que des alcoxysilanes polysulfurés.

Dans les compositions conformes à l'invention, le taux d'agent de couplage est avantageusement inférieur à 20 pce, étant entendu qu'il est en général souhaitable d'en utiliser le moins possible. Son taux est préférentiellement compris entre 0,5 et 12 pce. La présence de l'agent de couplage dépend de celle de la charge inorganique renforçante. Son taux est aisément ajusté par l'homme du métier selon le taux de cette charge; il est typiquement de l'ordre de 0,5% à 15% en poids par rapport à la quantité de charge inorganique renforçante.

Les compositions de caoutchouc conformes à l'invention peuvent également contenir, en complément des agents de couplage, des activateurs de couplage, des agents de recouvrement des charges ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalcoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir des charges organiques renforçantes qui peuvent remplacer tout ou partie des noirs de carbone ou des autres charges renforçantes décrites plus haut. Comme exemples de charges organiques renforçantes, on peut citer les charges organiques de polyvinyle fonctionnalisées telles que décrites dans les demandes WO-A-2006/069792, WO-A-2006/069793, WO-A-2008/003434 et WO-A-2008/003435.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, antioxydants, des agents anti-fatigue, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxydes et/ou de bismaléimides, des accélérateurs de vulcanisation, des activateurs de vulcanisation, des promoteurs d'adhésion sur des surfaces non caoutchouteuses tels que des composés à base de cobalt, des agents plastifiants, préférentiellement non aromatiques ou très faiblement aromatiques choisis dans le groupe constitué par les huiles naphténiques, paraffiniques, huiles MES, huiles TDAE, les plastifiants éthers, les plastifiants esters, les résines hydrocarbonées présentant une haute Tg, de préférence supérieure à 30 °C, telles que décrites par exemple dans les demandes WO 2005/087859, WO 2006/061064 et WO 2007/017060, et les mélanges de tels composés.

L'invention a également pour objet un procédé de préparation d'une composition de caoutchouc telle que décrite précédemment.

La composition est fabriquée dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé conforme à l'invention pour préparer une composition de caoutchouc selon l'invention comporte au moins les étapes suivantes :
- la réalisation, à une température maximale comprise entre 110 °C et 190 °C, de préférence entre 130°C et 180°C, d'un premier temps de travail thermomécanique (parfois qualifié de phase " non productive") des constituants de base nécessaires de la composition de caoutchouc, à l'exception du système de réticulation et le cas échéant un promoteur d'adhésion, par incorporation de manière intime, par malaxage en une ou plusieurs étapes, à la matrice élastomère comprenant l'élastomère diénique modifié selon l'invention, d'ingrédients de la composition, puis
- la réalisation, à une température inférieure à ladite température maximale dudit premier temps, de préférence inférieure à 110 °C, d'un second temps de travail mécanique au cours duquel sont incorporé ledit système de réticulation et le cas échéant un promoteur d'adhésion.

Selon des variantes de l'invention, le procédé de préparation de la composition de caoutchouc comprend les étapes de préparation de l'élastomère diénique modifié selon l'invention telles que décrites plus haut selon ses différentes méthodes de synthèse.

La composition finale ainsi obtenue peut ensuite être calandrée, par exemple sous la forme d'une feuille, d'une plaque ou encore extrudée, par exemple pour former un profilé de caoutchouc utilisable comme produit semi-fini en caoutchouc destiné au pneumatique.

L'invention a également pour objet un produit semi-fini en caoutchouc comprenant une composition de caoutchouc selon l'invention.

L'invention a également pour objet un pneumatique dont au moins un de ses éléments constitutifs est un produit semi-fini en caoutchouc comprenant une composition de caoutchouc selon l'invention.

En raison de l'amélioration du compromis hystérèse / mise en œuvre qui caractérise une composition de caoutchouc à base d'un élastomère modifié comprenant une fonction alcoxysilane et une fonction comprenant un atome d'azote, on notera qu'une telle composition peut constituer tout produit semi-fini du pneumatique et tout particulièrement la bande de roulement, diminuant ainsi la résistance au roulement du pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples

### Mesure utilisée

### Chromatographie d'exclusion stérique haute résolution (SEC HR)

La technique de SEC haute résolution est utilisée pour déterminer les pourcentages massiques des différentes populations de chaînes présentes dans un échantillon de polymère (1 branche (1b), 2 branches (2b), 3 branches (3b), 4 branches (4b)).

Il n'y a pas de traitement particulier de l'échantillon de polymère avant analyse. Celui-ci est simplement solubilisé dans le solvant d'élution à une concentration d'environ 1 g.L⁻¹. Puis la solution est filtrée sur filtre de porosité 0,45 µm avant injection.

L'appareillage utilisé est une chaîne chromatographique "WATERS alliance 2695". Le solvant d'élution est le tétrahydrofurane, le débit de 0,2 ml.min⁻¹, la température du système de 35 °C. Un jeu de trois colonnes identiques en série est utilisé (Shodex, longueur 300 mm, diamètre 8 mm). Le nombre de plateaux théoriques du jeu de colonnes est supérieur à 22 000. Le volume injecté de la solution de l'échantillon de polymère est 50 µL. Le détecteur est un réfractomètre différentiel "WATERS 2414" et le logiciel d'exploitation des données chromatographiques est le système "WATERS EMPOWER".

Les masses molaires calculées sont relatives à une courbe d'étalonnage réalisée pour des SBR de microstructure suivante : 25 % massique de motifs type styrène, 23 % massique de motifs type 1,2 et 50 % massique de motifs type 1,4-trans.

### Exemples de préparation d'élastomères

Dans 2 bouteilles en verre (bouteilles steinie) de 250 mL sont introduits 94,0 mL (72,4 g) de méthylcyclohexane, 11,6 mL (7,5 g) de butadiène, 2,5 mL de styrène (2,3 g) et 0,78 mL d'une solution de tétrahydrofurane dans le méthylcyclohexane à 0,73 mol.L⁻¹. Après neutralisation des impuretés dans la solution à polymériser par addition de n-Butyllithium (n-BuLi), 0,52 mL de n-BuLi à 0,111 mol.L⁻¹ dans le méthylcyclohexane sont ajoutés. La polymérisation est conduite à 50 °C.

Après 50 minutes, le taux de conversion en monomères atteint 70 %. Ce taux est déterminé par pesée d'un extrait séché à 140 °C, sous la pression réduite de 200 mmHg.

0,75 mL d'une solution de 3-(N,N-diméthylaminopropyl)triméthoxysilane à 0,05 mol.L⁻¹ dans le méthylcyclohexane sont ajoutés à la solution de polymère vivant (0,65 éq. molaire *vs* Li) contenue dans la bouteille n°1 et 0,76 mL d'une solution de 6-(N,N-diméthylaminohexyl)triméthoxysilane à 0,049 mol.L⁻¹ dans le méthylcyclohexane sont ajoutés à la solution de polymère vivant (0,65 éq. molaire *vs* Li) contenue dans la bouteille n°2. Après 15 minutes de réaction à 60 °C, 1 mL de méthanol pur est ajouté dans les bouteilles 1 et 2 puis 1 mL d'une solution contenant un mélange d'antioxydants 4,4'-méthylène-bis-2,6-tert-butylphénol/ N-(1,3-diméthylbutyl)-N'-phényl-p-phénylènediamine à 80/20 g/L dans le toluène sont ajoutés dans les bouteilles 1 et 2. Les polymères ainsi traités sont séparés de leur solution par séchage à 60 °C sous pression réduite et courant d'azote pendant 12 heures.

Des analyses SEC HR sont réalisées sur le produit fini récupéré à l'issue de cette étape de séchage (Jour J), puis après stockage des élastomères à température ambiante et à l'air ambiant pendant 7 jours puis 30 jours (respectivement J+7 et J+30).

Les résultats sont présentés dans le Tableau 1.

**Tableau 1**

| Echantillon | Agent de fonctionnalisation | SEC HR J produit fini (% 1 b/2b/3b/4b) | SEC HR J + 7 (% 1b/2b/3b/4b) | SEC HR J + 30 (%1b/2b/3b/4b) |
|---|---|---|---|---|
| 1 (com paratif) | (A) | 54/41/3/2 | 29/46/16/9 | 22/38/27/13 |
| 2 (invention) | (B) | 66/34/0/0 | 64/35/1/0 | 64/35/1/0 |

| | | | | |
|---|---|---|---|---|
| *(A) : 3-(N,N-diméthylaminopropyl)triméthoxysilane* *(B) : 6-(N,N-diméthylaminohexyl)triméthoxysilane* | | | | |

Il apparaît, d'après les résultats présentés dans le Tableau 1, que l'élastomère 2 selon l'invention, obtenu par fonctionnalisation avec le 6-(N,N-diméthylaminohexyl)triméthoxysilane, présente une répartition des populations à 1, 2 et 3 branches qui est stable au stockage contrairement à l'élastomère 1 comparatif, obtenu avec le 3-(N,N-diméthylaminopropyl)triméthoxysilane, qui présente une forte évolution de la répartition des populations au stockage.

## Revendications

1. Elastomère diénique modifié comprenant au sein de la chaîne principale de l'élastomère un atome de silicium substitué d'une part par au moins un groupe alcoxy, éventuellement partiellement ou totalement hydrolysé en hydroxyle, et, d'autre part, par au moins une autre fonction comprenant un atome d'azote liée à l'atome de silicium par l'intermédiaire d'un groupement espaceur choisi parmi les radicaux hydrocarbonés divalents aliphatiques, linéaires et saturés , ayant au moins 5 atomes de carbone, de préférence au moins 6, et au plus 10 atomes de carbone et de préférence au plus 9, laquelle autre fonction comprenant un atome d'azote est une amine primaire protégée ou non, secondaire protégée ou non, ou tertiaire, cyclique ou non, un isocyanate, une imine ou un cyano.

2. Elastomère diénique modifié selon la revendication 1, caractérisé en ce le groupement espaceur est un radical hydrocarboné divalent aliphatique, linéaire et saturé en C₆, C₇, C₈ ou C₉, de préférence en C₆.

3. Elastomère diénique modifié selon la revendication 1 ou 2, **caractérisé en ce que** l'autre fonction est une amine tertiaire de type dialkylamino- dont les radicaux alkyl, indépendamment l'un de l'autre, sont en C₁-C₄, de préférence méthyl ou éthyl.

4. Elastomère diénique modifié selon l'une quelconque des revendications précédentes, **caractérisé en ce qu'**il répond à la formule générale I suivante : 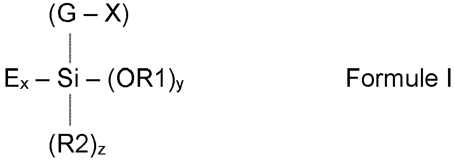 dans laquelle :
- E représente la chaîne élastomère diénique ;
- R1 représente un atome d'hydrogène ou un radical alkyle en C₁-C₁₀, voire en C₁-C₈, de préférence un radical alkyle en C₁-C₄, plus préférentiellement méthyle et éthyle ;
- R2 représente un radical alkyle, substitué ou non substitué, en C₁-C₁₀, voire en C₁-C₈, de préférence un radical alkyle en C₁-C₄, plus préférentiellement méthyle et éthyle ;
- G représente le groupement espaceur choisi parmi les radicaux hydrocarbonés divalents aliphatiques linéaires et saturés en C₆, C₇, C₈ ou C₉, de préférence en C₆
- X représente la fonction comprenant un atome d'azote;
- x vaut 1 ou 2, y vaut 1 ou 2, et z vaut 0 ou 1, sous réserve que x+y+z =3.

5. Procédé de synthèse d'un élastomère diénique modifié comprenant au sein de la chaîne principale de l'élastomère un atome de silicium substitué d'une part par au moins un groupe alcoxy, éventuellement partiellement ou totalement hydrolysé en hydroxyle, et, d'autre part, par au moins une autre fonction comprenant un atome d'azote liée à l'atome de silicium par l'intermédiaire d'un groupement espaceur, laquelle autre fonction comprenant un atome d'azote est une amine primaire protégée ou non, secondaire protégée ou non ou tertiaire, cyclique ou non, un isocyanate, une imine ou un cyano, **caractérisé en ce qu'**il comprend
a) une étape de polymérisation d'au moins un monomère diène,
b) une étape de modification de l'élastomère diénique vivant obtenu à l'étape précédente au moyen d'au moins un agent de fonctionnalisation répondant à la formule générale suivante :
Si (OR')_{3-z} (G-X) R_{2z}, Formule 2
dans laquelle,
- G est un groupement espaceur choisi parmi les radicaux hydrocarbonés divalents aliphatiques, linéaires et saturés, ayant au moins 5 atomes de carbone, de préférence au moins 6, et au plus 10 atomes de carbone,et de préférence au plus 9,
- X représente une amine primaire protégée ou non, secondaire protégée ou non ou tertiaire, cyclique ou non, un isocyanate, un imine, un cyano;
- R', indépendamment les uns des autres, représentent un groupe alkyle en C₁-C₁₀, voire en C₁-C₈, de préférence un groupe alkyle en C₁-C₄, plus préférentiellement méthyle et éthyle ;
- R₂ représente un groupe alkyle en C₁-C₁₀, voire en C₁-C₈ plus préférentiellement méthyle et éthyle ;
- z vaut 0 ou 1.

6. Procédé selon la revendication 5, **caractérisé en ce que** la fonction X est une amine tertiaire de type dialkylamino- dont les radicaux alkyl, indépendamment l'un de l'autre, sont en C₁-C₄, de préférence méthyl ou éthyl.

7. Procédé selon la revendication 5 ou 6, **caractérisé en ce que** le groupement espaceur est un radical hydrocarboné divalent aliphatique, linéaire et saturé en C₆, C₇, C₈ ou C₉, de préférence en C₆

8. Procédé selon l'une quelconque des revendications 5 à 7, **caractérisé en ce que** l'étape de polymérisation est mise en œuvre par polymérisation anionique en présence d'un initiateur de polymérisation.

9. Procédé selon la revendication 8, **caractérisé en ce que** le rapport molaire de l'agent de fonctionnalisation au métal de l'initiateur de polymérisation est supérieur à 0,5 et de préférence supérieur à 0,65.

10. Procédé selon la revendication 8, **caractérisé en ce que** le rapport molaire de l'agent de fonctionnalisation au métal de l'initiateur de polymérisation varie de 0,35 à 0,65, préférentiellement de 0,40 à 0,60.

11. Composition de caoutchouc à base d'au moins une charge renforçante et une matrice élastomère comprenant un élastomère diénique modifié tel que décrit dans l'une quelconque des revendications 1 à 4 .

12. Pneumatique comportant une composition de caoutchouc selon la revendication 11.

13. Composé répondant à la formule générale suivante :
Si (OR')_{3-z} (G-X) R_{2z}, Formule 2
dans laquelle,
- G est un groupement espaceur choisi parmi les radicaux hydrocarbonés divalents aliphatiques, linéaires et saturés, ayant au moins 5 atomes de carbone, de préférence au moins 6, et au plus 10 atomes de carbone et de préférence au plus 9,
- X représente une fonction amine secondaire, protégée ou non, ou amine tertiaire, une fonction isocyanate, une fonction imine, ou une fonction cyano;
- R', indépendamment les uns des autres, représentent un groupe alkyle en C₁-C₁₀, voire en C₁-C₈, de préférence un groupe alkyle en C₁-C₄, plus préférentiellement méthyle et éthyle ;
- R₂ représente un groupe alkyle en C₁-C₁₀, voire en C₁-C₈ plus préférentiellement méthyle et éthyle ;
- z vaut 0 ou 1.

14. Composé selon la revendication 13, **caractérisé en ce que** le groupement espaceur est un radical hydrocarboné divalent aliphatique, linéaire et saturé, en C₆, C₇, C₈ ou C₉, de préférence en C₆.

15. Composé selon la revendication 13 ou 14, **caractérisé en ce que** la fonction X est une une amine tertiaire de type dialkylamino- dont les radicaux alkyl, indépendamment l'un de l'autre, sont en C₁-C₄, de préférence méthyle ou éthyle.

## Patentansprüche

1. Modifiziertes Dienelastomer, das in der Hauptkette des Elastomers ein Siliciumatom umfasst, das einerseits durch mindestens eine gegebenenfalls teilweise oder vollständig zu Hydroxyl hydrolysierte Alkoxygruppe und andererseits durch mindestens eine weitere Funktion, die ein über eine Spacergruppe, die aus gesättigten linearen aliphatischen zweiwertigen Kohlenwasserstoffresten mit mindestens 5 Kohlenstoffatomen, vorzugsweise mindestens 6 und höchstens 10 Kohlenstoffatomen und vorzugsweise höchstens 9, ausgewählt ist, an das Siliciumatom gebundenes Stickstoffatom umfasst, substituiert ist, wobei es sich bei der weiteren Funktion, die ein Stickstoffatom umfasst, um ein cyclisches oder acyclisches, geschütztes oder ungeschütztes primäres, geschütztes oder ungeschütztes sekundäres oder tertiäres Amin, ein Isocyanat, ein Imin oder ein Cyano handelt.

2. Modifiziertes Dienelastomer nach Anspruch 1, **dadurch gekennzeichnet, dass** es sich bei der Spacergruppe um einen gesättigten linearen aliphatischen zweiwertigen C₆-, C₇-, C₈- oder C₉- und vorzugsweise C₆-Kohlenwasserstoffrest handelt.

3. Modifiziertes Dienelastomer nach Anspruch 1 oder 2, **dadurch gekennzeichnet, dass** es sich bei der weiteren Funktion um ein tertiäres Amin von Typ Dialkylamino- handelt, bei dessen Alkylresten es sich unabhängig voneinander um C₁-C₄-Alkylreste, vorzugsweise Methyl oder Ethyl, handelt.

4. Modifiziertes Dienelastomer nach einem der vorhergehenden Ansprüche, **dadurch gekennzeichnet, dass** es der folgenden allgemeinen Formel I entspricht: 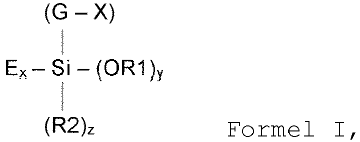 in der:
- E für die Dienelastomerkette steht;
- R1 für ein Wasserstoffatom oder einen C₁-C₁₀- oder sogar C₁-C₈-Alkylrest, vorzugsweise einen C₁-C₄-Alkylrest, weiter bevorzugt Methyl und Ethyl, steht;
- R2 für einen substituierten oder unsubstituierten C₁-C₁₀- oder sogar C₁-C₈-Alkylrest, vorzugsweise einen C₁-C₄-Alkylrest, weiter bevorzugt Methyl und Ethyl, steht;
- G für die Spacergruppe steht, die aus gesättigten linearen aliphatischen zweiwertigen C₆-, C₇-, C₈- oder C₉- und vorzugsweise C₆-Kohlenwasserstoffresten ausgewählt ist;
- X für die Funktion, die ein Stickstoffatom umfasst, steht;
- x für 1 oder 2 steht, y für 1 oder 2 steht und z für 0 oder 1 steht, mit der Maßgabe, dass x + y + z = 3.

5. Verfahren zur Herstellung eines modifizierten Dienelastomers, das in der Hauptkette des Elastomers ein Siliciumatom umfasst, das einerseits durch mindestens eine gegebenenfalls teilweise oder vollständig zu Hydroxyl hydrolysierte Alkoxygruppe und andererseits durch mindestens eine weitere Funktion, die ein über eine Spacergruppe an das Siliciumatom gebundenes Stickstoffatom umfasst, substituiert ist, wobei es sich bei der weiteren Funktion, die ein Stickstoffatom umfasst, um ein cyclisches oder acyclisches, geschütztes oder ungeschütztes primäres, geschütztes oder ungeschütztes sekundäres oder tertiäres Amin, ein Isocyanat, ein Imin oder ein Cyano handelt, **dadurch gekennzeichnet, dass** es Folgendes umfasst:
a) einen Schritt der Polymerisation von mindestens einem Dienmonomer,
b) einen Schritt der Modifizierung des im vorhergehenden Schritt erhaltenen lebenden Dienelastomers mit mindestens einem Funktionalisierungsmittel, dass der folgenden allgemeinen Formel entspricht:
Si (OR')_{3-z} (G-X)R_{2z} Formel 2,
in der
- G für eine Spacergruppe steht, die aus gesättigten linearen aliphatischen zweiwertigen Kohlenwasserstoffresten mit mindestens 5 Kohlenstoffatomen, vorzugsweise mindestens 6 und höchstens 10 Kohlenstoffatomen und vorzugsweise höchstens 9, ausgewählt ist;
- X für ein cyclisches oder acyclisches, geschütztes oder ungeschütztes primäres, geschütztes oder ungeschütztes sekundäres oder tertiäres Amin, ein Isocyanat, ein Imin oder ein Cyano steht;
- die Reste R' unabhängig voneinander für eine C₁-C₁₀- oder sogar C₁-C₈-Alkylgruppe, vorzugsweise eine C₁-C₄-Alkylgruppe, weiter bevorzugt Methyl und Ethyl, stehen;
- R₂ für eine C₁-C₁₀- oder sogar C₁-C₈-Alkylgruppe, weiter bevorzugt Methyl und Ethyl, stehen;
- z für 0 oder 1 steht.

6. Verfahren nach Anspruch 5, **dadurch gekennzeichnet, dass** es sich bei der Funktion X um ein tertiäres Amin von Typ Dialkylamino- handelt, bei dessen Alkylresten es sich unabhängig voneinander um C₁-C₄-Alkylreste, vorzugsweise Methyl oder Ethyl, handelt.

7. Verfahren nach Anspruch 5 oder 6, **dadurch gekennzeichnet, dass** es sich bei der Spacergruppe um einen gesättigten linearen aliphatischen zweiwertigen C₆-, C₇-, C₈- oder C₉- und vorzugsweise C₆-Kohlenwasserstoffrest handelt.

8. Verfahren nach einem der Ansprüche 5 bis 7, **dadurch gekennzeichnet, dass** der Polymerisationsschritt durch anionische Polymerisation in Gegenwart eines Polymerisationsinitiators durchgeführt wird.

9. Verfahren nach Anspruch 8, **dadurch gekennzeichnet, dass** das Molverhältnis von Funktionalisierungsmittel zu Metall des Polymerisationsinitiators größer als 0,5 und vorzugsweise größer als 0,65 ist.

10. Verfahren nach Anspruch 8, **dadurch gekennzeichnet, dass** das Molverhältnis von Funktionalisierungsmittel zu Metall des Polymerisationsinitiators von 0,35 bis 0,65, vorzugsweise von 0,40 bis 0,60, variiert.

11. Kautschukzusammensetzung auf Basis mindestens eines verstärkenden Füllstoffs und einer Elastomermatrix, die ein modifiziertes Dienelastomer gemäß einem der Ansprüche 1 bis 4 umfasst.

12. Reifen, umfassend eine Kautschukzusammensetzung nach Anspruch 11.

13. Verbindung, die der folgenden allgemeinen Formel entspricht:
Si (OR')_{3-z}(G-X)R_{2z} Formel 2,
in der
- G für eine Spacergruppe steht, die aus gesättigten linearen aliphatischen zweiwertigen Kohlenwasserstoffresten mit mindestens 5 Kohlenstoffatomen, vorzugsweise mindestens 6 und höchstens 10 Kohlenstoffatomen und vorzugsweise höchstens 9, ausgewählt ist;
- X für ein cyclisches oder acyclisches, geschütztes oder ungeschütztes primäres, geschütztes oder ungeschütztes sekundäres oder tertiäres Amin, ein Isocyanat, ein Imin oder ein Cyano steht;
- die Reste R' unabhängig voneinander für eine C₁-C₁₀- oder sogar C₁-C₈-Alkylgruppe, vorzugsweise eine C₁-C₄-Alkylgruppe, weiter bevorzugt Methyl und Ethyl, stehen;
- R₂ für eine C₁-C₁₀- oder sogar C₁-C₈-Alkylgruppe, weiter bevorzugt Methyl und Ethyl, steht;
- z für 0 oder 1 steht.

14. Verbindung nach Anspruch 13, **dadurch gekennzeichnet, dass** es sich bei der Spacergruppe um einen gesättigten linearen aliphatischen zweiwertigen C₆-, C₇-, C₈- oder C₉- und vorzugsweise C₆-Kohlenwasserstoffrest handelt.

15. Verbindung nach Anspruch 13 oder 14, **dadurch gekennzeichnet, dass** es sich bei der Funktion X um ein tertiäres Amin von Typ Dialkylamino- handelt, bei dessen Alkylresten es sich unabhängig voneinander um C₁-C₄-Alkylreste, vorzugsweise Methyl oder Ethyl, handelt.

## Claims

1. Modified diene elastomer comprising, within the main chain of the elastomer, a silicon atom substituted, on the one hand, by at least one alkoxy group, optionally partially or completely hydrolysed to give a hydroxyl group, and, on the other hand, by at least one other functional group comprising a nitrogen atom bonded to the silicon atom via a spacer group chosen from saturated linear divalent aliphatic hydrocarbon radicals having at least 5 carbon atoms, preferably at least 6, and at most 10 carbon atoms, preferably at most 9, the other functional group comprising a nitrogen atom being a cyclic or non-cyclic, tertiary, protected or unprotected secondary or protected or unprotected primary amine, an isocyanate, an imine or a cyano.

2. Modified diene elastomer according to Claim 1, **characterized in that** the spacer group is a saturated linear divalent C₆, C₇, C₈ or C₉, preferably C₆, aliphatic hydrocarbon radical.

3. Modified diene elastomer according to Claim 1 or 2, **characterized in that** the other functional group is a dialkylamino- tertiary amine, the alkyl radicals of which, independently of one another, are C₁-C₄ alkyl radicals, preferably methyl or ethyl.

4. Modified diene elastomer according to any one of the preceding claims, **characterized in that** it corresponds to the following general formula I: 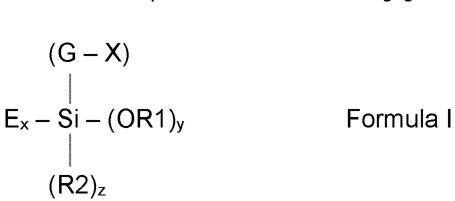 in which:
- E represents the diene elastomer chain;
- R1 represents a hydrogen atom or a C₁-C₁₀, indeed even C₁-C₈, alkyl radical, preferably a C₁-C₄ alkyl radical, more preferably methyl and ethyl;
- R2 represents a substituted or unsubstituted C₁-C₁₀, indeed even C₁-C₈, alkyl radical, preferably a C₁-C₄ alkyl radical, more preferably methyl and ethyl;
- G represents the spacer group chosen from saturated linear divalent C₆, C₇, C₈ or C₉, preferably C₆, aliphatic hydrocarbon radicals;
- X represents the functional group comprising a nitrogen atom;
- x has the value 1 or 2, y has the value 1 or 2 and z has the value 0 or 1, with the proviso that x + y + z = 3.

5. Process for the synthesis of a modified diene elastomer comprising, within the main chain of the elastomer, a silicon atom substituted, on the one hand, by at least one alkoxy group, optionally partially or completely hydrolysed to give a hydroxyl group, and, on the other hand, by at least one other functional group comprising a nitrogen atom bonded to the silicon atom via a spacer group, the other functional group comprising a nitrogen atom being a cyclic or non-cyclic, tertiary, protected or unprotected secondary or protected or unprotected primary amine, an isocyanate, an imine or a cyano, **characterized in that** it comprises:
a) a stage of polymerization of at least one diene monomer,
b) a stage of modification of the living diene elastomer obtained in the preceding stage by means of at least one functionalization agent corresponding to the following general formula:
Si(OR')_{3-z}(G-X)R_{2z}, Formula 2
in which:
- G is a spacer group chosen from saturated linear divalent aliphatic hydrocarbon radicals having at least 5 carbon atoms, preferably at least 6, and at most 10 carbon atoms, preferably at most 9;
- X represents a functional group comprising a nitrogen atom;
- R', independently of one another, represent a C₁-C₁₀, indeed even C₁-C₈, alkyl group, preferably a C₁-C₄ alkyl group, more preferably methyl and ethyl;
- R₂ represents a C₁-C₁₀, indeed even C₁-C₈, alkyl group, more preferably methyl and ethyl;
- z has the value 0 or 1.

6. Process according to Claim 5, **characterized in that** the functional group X is a dialkylamino- tertiary amine, the alkyl radicals of which, independently of one another, are C₁-C₄ alkyl radicals, preferably methyl or ethyl.

7. Process according to Claim 5 or 6, **characterized in that** the spacer group is a saturated linear divalent C₆, C₇, C₈ or C₉, preferably C₆, aliphatic hydrocarbon radical.

8. Process according to any one of Claims 5 to 7, **characterized in that** the polymerization stage is carried out by anionic polymerization in the presence of a polymerization initiator.

9. Process according to Claim 8, **characterized in that** the molar ratio of the functionalization agent to the metal of the polymerization initiator is greater than 0.5 and preferably greater than 0.65.

10. Process according to Claim 8, **characterized in that** the molar ratio of the functionalization agent to the metal of the polymerization initiator varies from 0.35 to 0.65, preferably from 0.40 to 0.60.

11. Rubber composition based on at least one reinforcing filler and an elastomer matrix comprising a modified diene elastomer as described in any one of Claims 1 to 4.

12. Tyre comprising a rubber composition according to Claim 11.

13. Compound corresponding to the following general formula:
Si(OR')_{3-z}(G-X)R_{2z}, Formula 2
in which:
- G is a spacer group chosen from saturated linear divalent aliphatic hydrocarbon radicals having at least 5 carbon atoms, preferably at least 6, and at most 10 carbon atoms, preferably at most 9;
- X represents a tertiary amine or protected or unprotected secondary amine functional group, an isocyanate functional group, an imine functional group or a cyano functional group;
- R', independently of one another, represent a C₁-C₁₀, indeed even C₁-C₈, alkyl group, preferably a C₁-C₄ alkyl group, more preferably methyl and ethyl;
- R₂ represents a C₁-C₁₀, indeed even C₁-C₈, alkyl group, more preferably methyl and ethyl;
- z has the value 0 or 1.

14. Compound according to Claim 13, **characterized in that** the spacer group is a saturated linear divalent C₆, C₇, C₈ or C₉, preferably C₆, aliphatic hydrocarbon radical.

15. Compound according to Claim 13 or 14, **characterized in that** the functional group X is a dialkylamino- tertiary amine, the alkyl radicals of which, independently of one another, are C₁-C₄ alkyl radicals, preferably methyl or ethyl.
